# EUROPEAN PATENT APPLICATION

(11) **EP 3 225 882 A1**
(43) Date of publication of application: **04.10.2017**
(21) Application number: 15862834.7
(22) Date of filing: 16.10.2015
(51) Int. Cl.: F16H 55/30, B01D 24/44, B01D 29/94, B01D 33/58, B01D 33/80

(54) **DRIVE SHAFT WITH DIRECT-MOUNTED SPROCKETS FOR FILTRATION APPARATUS**

(30) Priority: 27.11.2014 JP 2014240127
(71) Applicant: Bunri Incorporation, Miyakonojo-shi Miyazaki 885-1202 (JP)
(72) Inventor: TASHIRO, Minoru, Tokyo 140-0014 (JP); TASHIRO, Makoto, Tokyo 140-0014 (JP)
(74) Representative: Awapatent AB
(86) International application number: PCT/JP2015/079356
(87) International publication number: WO 2016/084516

(57) **Abstract**

A substantially maintenance-free drive shaft (55) with direct-mounted sprockets is arranged in a chain drive unit (14) which drives a conveyor (13) of a filtration apparatus. The drive shaft (55) with direct-mounted sprockets includes a shaft body (60), a pair of metal plate sprockets (61, 62), and first padding portions (71) and second padding portions (72) formed of weld beads. The first padding portions (71) are formed at the respective corner portions defined by side surfaces (61b, 61c) of the first metal plate sprocket (61) and the shaft body (60). Further, the first padding portions (71) are formed such that their positions are changed to alternate with each other in a circumferential direction of the shaft body (60). The second padding portions (72) are formed at the respective corner portions defined by side surfaces (62b, 62c) of the second metal plate sprocket (62) and the shaft body (60). Further, the second padding portions (72) are formed such that their positions are changed to alternate with each other in the circumferential direction of the shaft body (60). A torque input to the shaft body (60) is transmitted to the metal plate sprockets (61, 62) via the padding portions (71, 72).

## Description

### Technical Field

The present invention relates to a drive shaft with direct-mounted sprockets for a filtration apparatus used in a drive unit for driving a conveyor chain of the filtration apparatus.

### Background Art

Conventionally, various filtration apparatuses for removing an object to be removed such as metallic or non-metallic particles or shavings included in a liquid, or sludge and purifying the liquid have been proposed. The filtration apparatus disclosed in, for example, Patent Literatures 1 to 3 comprises a filter tank, a scraper conveyor, etc. The scraper conveyor includes a pair of chains, and a plurality of scrapers arranged on the chains at a predetermined pitch. The chains are driven by a pair of sprockets, which are rotated by a motor of a chain drive unit, respectively. The sprockets are mounted on a drive shaft.

A standard sprocket used in a conventional filtration apparatus is manufactured by casting or forging. The conventional standard sprocket includes a sprocket main body portion including teeth, and a boss portion formed at the central part of the sprocket main body portion. A drive shaft is inserted into the boss potion. Accordingly, on each of an inner surface of the boss portion of the conventional sprocket and the drive shaft, a keyway is formed. A torque is transmitted via a key inserted into these keyways. Also, on a conventional drive shaft, a retaining ring groove for fitting a retaining ring is formed. By fitting a C-type retaining ring formed of a spring material in this retaining groove, positioning of the sprocket with respect to the drive shaft in the axial direction is achieved.

### Citation List

### Patent Literatures

Patent Literature 1: JP 2904334B
Patent Literature 2: JP 3389126B
Patent Literature 3: JP 4830043B

### Summary of Invention

### Technical Problem

In a conventional drive shaft, a place where the retaining ring groove is formed may become a point which causes breaking. Further, the diameter of the place where the retaining ring groove is formed corresponds to an effective diameter for substantially transmitting the torque. Accordingly, the drive shaft on which the retaining ring groove is formed has a problem that the magnitude of torque which can be input is restricted by the retaining ring groove. In addition, work which needs to be done for the machining is time-consuming, since in the conventional case, a keyway must be provided in each of the inner surface of the boss portion of the sprocket and the drive shaft, and a retaining ring groove must be formed on the drive shaft, for example. Also, the conventional type is extremely uneconomical in that the number of components is increased, for example, due to the necessity of a key besides the drive shaft and the sprocket, affecting the cost of the filtration apparatus.

When the sprocket is fixed to the drive shaft by means of the key and the retaining ring as has been done conventionally, there is no backlash between the drive shaft and the sprocket while they are new. However, in accordance with use of the apparatus, a fitting portion of the key and the keyway or a fitting portion of the retaining ring and the retaining ring groove is gradually worn. When the fitting portion is worn away, a backlash is created between the drive shaft and the sprocket, which becomes a cause of vibration and a noise. In addition, when assembling the chain drive unit, the operation of fitting the retaining ring in the retaining ring groove while expanding the retaining ring by using a tool is not easy. If the retaining ring is dropped in a filter tank by mistake during the operation, efforts must be expended to no small extent for finding and collecting the retaining ring.

Accordingly, an object of the present invention is to provide a drive shaft with direct-mounted sprockets for a filtration apparatus which can withstand a torque of a motor, is strong, and has a great economical advantage.

### Solution to Problem

An embodiment of the present invention relates to a drive shaft with direct-mounted sprockets used in a chain drive unit of a filtration apparatus, and the drive shaft includes: a shaft body including a straight portion having a cylindrical shape whose outside diameter is constant, a first end portion, and a second end portion, in which a torque of a motor is input to the first end portion; a first metal plate sprocket which is arranged on the straight portion of the shaft body at a position close to the first end portion; a second metal plate sprocket which is arranged on the straight portion of the shaft body at a position close to the second end portion in such a way that it is parallel to the first metal plate sprocket; first padding portions; and second padding portions. The first metal plate sprocket includes first teeth and side surfaces. The second metal plate sprocket includes second teeth and side surfaces, and the second teeth are the same in number as the first teeth, and are provided at positions corresponding to those of the first teeth. Each of the first padding portions is formed of a weld bead obtained by fillet welding provided at a corner portion defined by the side surfaces of the first metal plate sprocket and the shaft body, and the first padding portions are formed such that their positions are changed to alternate with each other in a circumferential direction of the shaft body. Each of the second padding portions is formed of a weld bead obtained by fillet welding provided at a corner portion defined by the side surfaces of the second metal plate sprocket and the shaft body, and the second padding portions are formed such that their positions are changed to alternate with each other in the circumferential direction of the shaft body. Also, a keyway in which a key is inserted is formed along the axis of the shaft body on the first end portion of the shaft body, in which the key enables coupling with an output shaft of a motor unit. Furthermore, positions of the first tooth and the second tooth conform to each other on a line along the keyway, the first metal plate sprocket is fixed to the straight portion by the first padding portions, and the second metal plate sprocket is fixed to the straight portion by the second padding portions.

In this embodiment, the first padding portions and the second padding portions may be formed at equal pitches in the circumferential direction of the shaft body. Further, the first padding portions and the second padding portions may be formed in mutually matching positions in the circumferential direction of the shaft body. The shaft body includes a straight portion whose outside diameter is constant throughout the entire length between the first padding portions and the second padding portions. Furthermore, the thickness of each of the first teeth and the second teeth should preferably be less than half the inner width of each of corresponding chain links meshing with the teeth.

### Advantageous Effects of Invention

According to the drive shaft with direct-mounted sprockets of the present invention, a retaining ring groove formed in a conventional drive shaft is no longer necessary, and one of the causes of a break of the drive shaft (i.e., the retaining ring groove) is eliminated. By the above feature, it has become possible to transmit a torque that is greater than or equal to that applied in a conventional sprockets by using a shaft body having a diameter less than or equal to that of a conventional drive shaft. Also, the drive shaft with direct-mounted sprockets according to the present invention does not require a keyway or a retaining ring groove for fixing the sprockets. Accordingly, as compared to a conventional drive shaft, the drive shaft of the present embodiment can be manufactured more easily and requires fewer components, so that it has great economical advantages.

In the conventional drive shaft, a torque is transmitted to the sprocket via a key inserted into the keyway. Accordingly, stress is concentrated on a fitting portion of the key and the keyway, which causes a backlash to be created. In contrast, with respect to the drive shaft with direct-mounted sprockets according to the present invention, a torque is transmitted to the sprockets from the drive shaft via the padding portions which couple the shaft body and the respective sprockets together. Accordingly, there is no risk of having a backlash between the shaft body and each of the sprockets. Accordingly, while the drive shaft of the present invention is substantially maintenance-free, it can reduce the cause of vibration and noise.

### Brief Description of Drawings

FIG. 1 is a cross-sectional view showing an example of a filtration apparatus.
FIG. 2 is a cross-sectional view of the filtration apparatus taken along line F2-F2 of FIG. 1.
FIG. 3 is an exploded cross-sectional view of a chain drive unit comprising a drive shaft with direct-mounted sprockets according to one embodiment.
FIG. 4 is a perspective view of a part of the drive shaft with direct-mounted sprockets.
FIG. 5 is a plan view of the drive shaft with direct-mounted sprockets.
FIG. 6 is a cross-sectional view of the drive shaft with direct-mounted sprockets taken along line F6-F6 of FIG. 3.

### Mode for Carrying Out the Invention

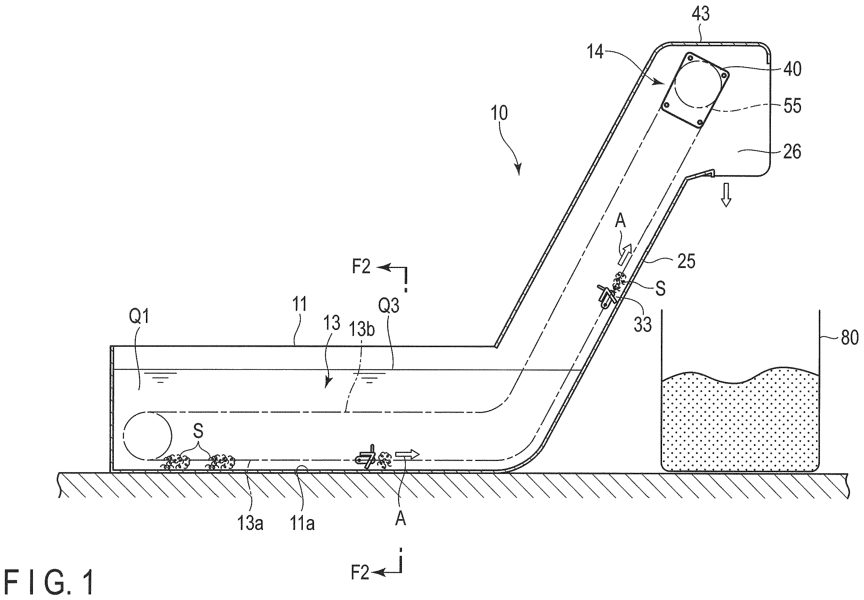

A filtration apparatus comprising a drive shaft with direct-mounted sprockets according to one embodiment will now be described with reference to FIGS. 1 to 6. FIG. 1 shows an outline of a filtration apparatus 10 for removing an object to be removed in a liquid Q1. An example of the filtration apparatus 10 includes a filter tank 11 that accommodates the liquid Q1 that should be filtered, a conveyor 13 disposed in the filter tank 11, and a chain drive unit 14 which drives the conveyor 13.

A lift portion 25 is formed at an end portion of the filter tank 11. The lift portion 25 extends obliquely toward the upper side of a liquid level Q3 in the filter tank 11, and extends to the outside of the filter tank 11. A discharge portion 26 is formed at an upper end of the lift portion 25. The discharge portion 26 is provided at a position higher than the liquid level Q3. The chain drive unit 14 using a motor as a drive source is provided near the discharge portion 26.

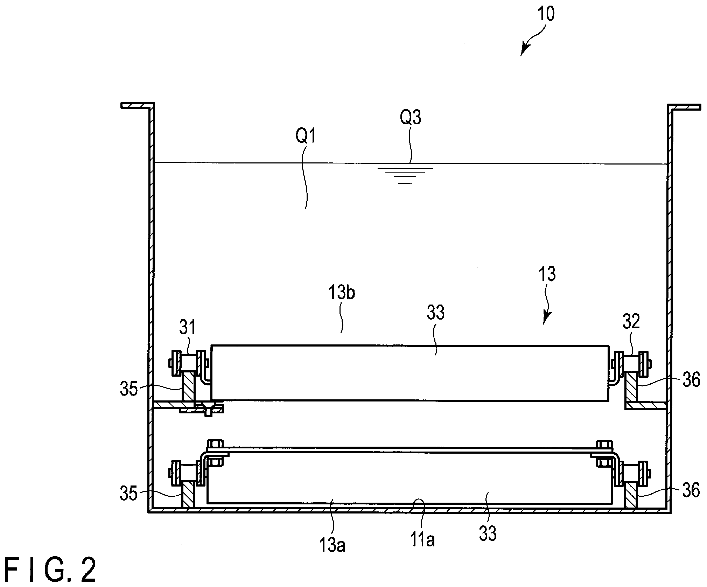

The conveyor 13 is arranged to be extended to the lift portion 25 and the discharge portion 26 from a bottom portion 11a of the filter tank 11. As shown in FIG. 2, the conveyor 13 includes a pair of chains 31 and 32, and a plurality of scrapers 33 attached to the chains 31 and 32. The scrapers 33 are disposed at predetermined intervals in a longitudinal direction of the chains 31 and 32. The chains 31 and 32 are movably supported by guide members 35 and 36 (FIG. 2) provided in the filter tank 11.

The conveyor 13 moves in the direction indicated by arrow A in FIG. 1 by the chain drive unit 14. The conveyor 13 includes a lower portion 13a which moves along the bottom portion 11a, and an upper portion 13b which moves in a direction opposite to the direction of movement of the lower portion 13a above the lower portion 13a.

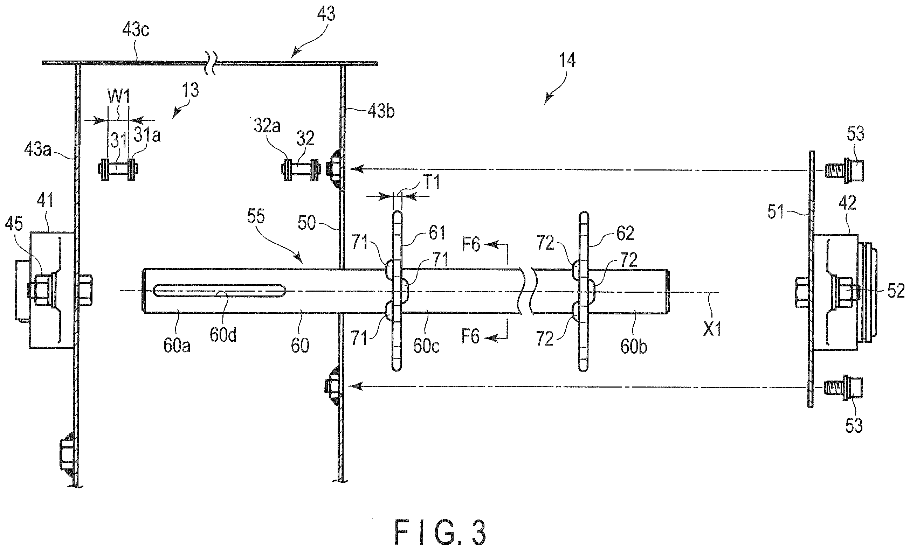

The chain drive unit 14 comprises a motor unit 40 (FIG. 1) provided with a speed reducer which produces a torque for driving the chains 31 and 32. FIG. 3 is an exploded cross-sectional view of a part of the chain drive unit 14. The chain drive unit 14 includes a pair of bearings 41 and 42, a cover 43, a drive shaft 55 with direct-mounted sprockets, etc. As will be described in detail later, the drive shaft 55 with direct-mounted sprockets comprises a shaft body 60, a first metal plate sprocket 61, a second metal plate sprocket 62, a first padding portion 71, and a second padding portion 72.

The cover 43 of the chain drive unit 14 includes a pair of side plates 43a and 43b, and an upper plate 43c. The first bearing 41 is fixed to the first side plate 43a by a bolt 45. The first bearing 41 rotatably supports the vicinity of a first end portion 60a of the shaft body 60.

In the second side plate 43b of the cover 43, an opening 50 of a size which allows the drive shaft 55 with direct-mounted sprockets to be inserted therein horizontally is formed. The internal diameter of the opening 50 is greater than the outside diameter of each of the metal plate sprockets 61 and 62. The opening 50 is closed by a lid 51. The second bearing 42 is mounted on the lid 51 by a bolt 52. The lid 51 is fixed to the second side plate 43b by bolts 53. The second bearing 42 rotatably supports a second end portion 60b of the shaft body 60 of the drive shaft 55 with direct-mounted sprockets.

The drive shaft 55 with direct-mounted sprockets is inserted into the cover 43 through the opening 50, and the first end portion 60a of the shaft body 60 is inserted into first bearing 41. Further, the second bearing 42 is made to fit on the second end portion 60b of the shaft body 60, and the lid 51 is fixed to the second side plate 43b by the bolts 53.

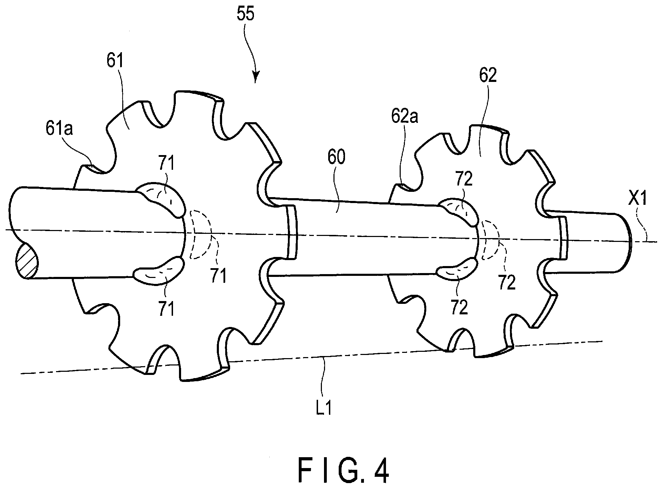

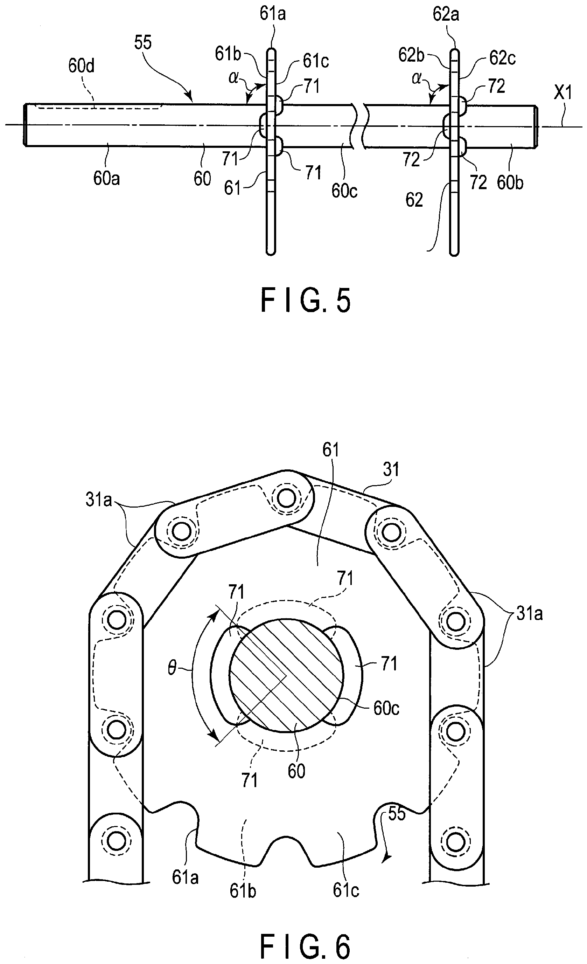

FIG. 4 is a perspective view of a part of the drive shaft 55 with direct-mounted sprockets. FIG. 5 is a plan view of the drive shaft 55 with direct-mounted sprockets as seen from above. The drive shaft 55 with direct-mounted sprockets includes the shaft body 60, the first metal plate sprocket 61, the second metal plate sprocket 62, a plurality of first padding portions 71, and a plurality of second padding portions 72. The shaft body 60 is formed of a straight metal rod. Each of the metal plate sprockets 61 and 62 is formed of a metal plate having a thickness of 6 mm, for example.

The shaft body 60 includes the first end portion 60a to which the torque of the motor is input, and the second end portion 60b which is on the side opposite to the first end portion 60a. The shaft body 60 includes a cylindrical straight portion 60c. In the straight portion 60c, the outside diameter is constant throughout the entire length of a region including the first padding portions 71 and the second padding portions 72. On this straight portion 60c, a keyway and a retaining ring groove as seen in a sprocket mounting portion of a conventional drive shaft are not formed. Accordingly, the outside diameter of the straight portion 60c corresponds to an effective diameter for transmitting the torque of the motor unit 40.

On the first end portion 60a of the shaft body 60, a torque of the motor unit 40 (a torque of the motor) is input. Accordingly, on the first end portion 60a, a keyway 60d into which a key is inserted is formed so as to achieve coupling with a hollow output shaft incorporated in the motor unit 40. As shown in FIGS. 3 and 5, the keyway 60d is formed along axis X1 of the shaft body 60.

The first metal plate sprocket 61 is arranged at a position close to the first end portion 60a in the entire length of the straight portion 60c of the shaft body 60. The first metal plate sprocket 61 includes first teeth 61a and side surfaces 61b and 61c.

The second metal plate sprocket 62 is arranged at a position close to the second end portion 60b in the entire length of the straight portion 60c of the shaft body 60. The second metal plate sprocket 62 includes second teeth 62a and side surfaces 62b and 62c. The second teeth 62a are the same in number as the first teeth 61a. Accordingly, the outside diameters of the metal plate sprockets 61 and 62 are the same.

The first metal plate sprocket 61 and the second metal plate sprocket 62 are arranged parallel to each other. As shown in FIG. 4, the position of the tooth 61a of the first metal plate sprocket 61 (i.e., the position in the direction of rotation) and the position of the tooth 62a of the second metal plate sprocket 62 (i.e., the position in the direction of rotation) conform to each other on line L1 along axis X1, in other words, line L1 along the keyway 60d.

The shaft body 60, the first metal plate sprocket 61, and the second metal plate sprocket 62 are formed of carbon steel for machine parts (for example, S45C conforming to JIS) having chemical components common to each other. The chemical components (wt %) of S45C are C: 0.42 to 0.48; Si: 0.15 to 0.35; Mn: 0.60 to 0.90; P: 0.030 or less; S: 0.035 or less; and Fe: the remainder.

The first padding portion 71 is formed of a weld bead obtained by fillet welding. The first padding portion 71 is provided at a corner portion defined by the side surfaces 61b and 61c of the first metal plate sprocket 61 and the shaft body 60. FIG. 6 representatively shows the first metal plate sprocket 61 and the first padding portion 71. Two first padding portions 71 are formed on each of the side surface 61b and the other side surface 61c of the first metal plate sprocket 61. Further, the first padding portions 71 are formed on the side surface 61b and the other side surface 61c alternately in a circumferential direction of the shaft body 60. More specifically, the first padding portions 71 are formed at equal pitches in four places in total by alternating their positions by 90 degrees in the circumferential direction of the shaft body 60.

The second metal plate sprocket 62 is structured in the same way as the first metal plate sprocket 61. The second padding portion 72 is structured in the same way as the first padding portion 71. That is, the second padding portion 72 is formed of a weld bead obtained by fillet welding likewise the first padding portion 71. The second padding portion 72 is provided at a corner portion defined by the side surfaces 62b and 62c of the second metal plate sprocket 62 and the shaft body 60. Two second padding portions 72 are formed on each of the side surface 62b and the other side surface 62c of the second metal plate sprocket 62. Further, the second padding portions 72 are formed on the side surface 62b and the other side surface 62c alternately in the circumferential direction of the shaft body 60. More specifically, the second padding portions 72 are formed at equal pitches in four places in total by alternating their positions by 90 degrees in the circumferential direction of the shaft body 60, likewise the first padding portions 71.

The first metal plate sprocket 61 is fixed to the straight portion 60c of the shaft body 60 by the first padding portions 71. The second metal plate sprocket 62 is fixed to the straight portion 60c of the shaft body 60 by the second padding portions 72. When these metal plate sprockets 61 and 62 are arc-welded to the shaft body 60, the first metal plate sprocket 61 and the second metal plate sprocket 62 are positioned as shown in FIG. 4. That is, the metal plate sprockets 61 and 62 are positioned by a jig such that the position of the tooth 61a of the first metal plate sprocket 61 and the position of the tooth 62a of the second metal plate sprocket 62 conform to each other on line L1 along the keyway 60d.

As can be seen, the positions of the respective teeth of the first teeth 61a and the second teeth 62a (i.e., the positions in the direction of rotation of the shaft body 60) are made to conform to each other. In other words, the position of the first tooth 61a and the position of the second tooth 62a are made to conform to each other on line L1 along the keyway 60d. In this state, the first metal plate sprocket 61 is fixed to the straight portion 60c by the first padding portions 71, and the second metal plate sprocket 62 is fixed to the straight portion 60c by the second padding portions 72.

In one example of the first padding portion 71 shown in FIG. 6, each of the padding portions 71 is formed in an angular range θ that is slightly greater than 90° in the circumferential direction as seen in a direction from the side surface of the first metal plate sprocket 61. Accordingly, the positions of end portions of the respective padding portions 71 in the circumferential direction overlap one another. Similarly in the second padding portions 72, each of the padding portions 72 is formed in the angular range θ that is slightly greater than 90° in the circumferential direction as seen in a direction from the side surface of the second metal plate sprocket 62. Accordingly, the positions of end portions of the respective padding portions 72 in the circumferential direction overlap one another. Moreover, the first padding portions 71 and the second padding portions 72 are formed in the matching places corresponding to each other in the circumferential direction of the shaft body 60. Accordingly, variations in the shape and the position of the first padding portion 71 and the second padding portion 72 can be managed relatively easily by a visual inspection.

The first padding portions 71 are formed on the side surfaces 61b and 61c of the sprocket 61 alternately with their positions changed in a circumferential direction of the first metal plate sprocket 61. The second padding portions 72 are also formed on the side surfaces 62b and 62c of the sprocket 62 alternately with their positions changed in a circumferential direction of the second metal plate sprocket 62. Accordingly, it is possible to prevent the perpendicularity α of the metal plate sprockets 61 and 62 with respect to the axis X1 (FIGS. 3, 4, and 5) of the shaft body 60 from being deteriorated.

The torque of the motor unit 40 input to the shaft body 60 is transmitted to the first and second metal plate sprockets 61 and 62 via the first and second padding portions 71 and 72. As the first and second metal plate sprockets 61 and 62 rotate integrally with the shaft body 60, the chains 31 and 32 move.

According to the drive shaft 55 with direct-mounted sprockets of the present embodiment, there is no need to form a keyway for mounting a sprocket and a retaining ring groove on the shaft body 60 as in a conventional drive shaft. That is, a groove which may become a point which causes breaking is not formed on the straight portion 60c of the shaft body 60. Therefore, the shaft body 60 can exhibit great strength against the torque to be input. In other words, even a shaft body 60 having a diameter smaller than that of a conventional drive shaft can withstand a torque from a motor that outputs large power. Moreover, a keyway for mounting a sprocket and a retaining ring groove do not need to be formed as in the conventional drive shaft. Accordingly, work and equipment required for processing these grooves can be omitted, and great economic effects can be produced.

In a sprocket mounting portion of a conventional drive shaft, a backlash may be created in a fitting portion of a key and a keyway. However, such a portion (a fitting portion of a key and a keyway) does not exist in the drive shaft 55 with direct-mounted sprockets of the present embodiment. Accordingly, with respect to the drive shaft 55 with direct-mounted sprockets of the present embodiment, the metal plate sprockets 61 and 62 are rotated integrally in synchronization with each other in such a state that the positions of the first teeth 61a and the positions of the second teeth 62a are completely aligned. Accordingly, while the present embodiment has the feature of being substantially maintenance-free, vibration and a noise of the conveyor 13 can be reduced.

An example of an inner width W1 of each of chain links 31a and 32a (one of which is shown in FIG. 3), which are the constituent elements of the chains 31 and 32, is 12.7 mm. In a conventional standard sprocket, the thickness of a tooth of the sprocket is 11.9 mm, and there is practically no space between an inner surface of the chain link and the tooth. Accordingly, sludge is accumulated between the inner surface of the chain link and the tooth in the conventional case, which would adversely affect meshing of the chain. Hence, conventionally, a chamfered portion for dropping the sludge has been formed on the tooth, but machining to be performed for forming this is very troublesome.

Meanwhile, an example of a thickness T1 (FIG. 3) of the first and second metal plate sprockets 61 and 62 of the drive shaft 55 with direct-mounted sprockets is 6.0 mm. That is, the thickness of each of the teeth 61a and 62a is less than half the inner width W1 of each of the chain links 31a and 32a. Thereby, a sufficient space for dropping the sludge is secured between the inner surface of each of the chain links 31a and 32a and the side surface of each of the teeth 61a and 62a. Even if the drive shaft 55 with direct-mounted sprockets is not provided with a chamfered portion for sludge dropping which has been conventionally formed on each tooth, the drive shaft 55 with direct-mounted sprockets can prevent sludge from being accumulated on the teeth 61a and 62a. This feature plays a part in the maintenance-free capability of the chain drive unit 14.

An object S to be removed which is deposited at the bottom portion 11a of the filter tank 11 is conveyed toward the discharge portion 26 through the lift portion 25 by the scrapers 33 of the conveyor 13. The chains 31 and 32 of the conveyor 13 are moved as the motor unit 40 of the chain drive unit 14 is rotated. The object S to be removed which has been conveyed to the discharge portion 26 by the conveyor 13 falls toward a collection box 80.

### Industrial Applicability

Needless to say, in carrying out the present invention, as well as the specific structure of the filtration apparatus, the specific forms of the shaft body of the drive shaft with direct-mounted sprockets arranged in the chain drive unit, the first and second metal plate sprockets, and the shape, position or the number of the padding portions may be modified variously.

### Reference Signs List

10···Filtration apparatus, 11···Filter tank, 13··· Conveyor, 14···Chain drive unit, 26···Discharge portion, 31, 32···Chains, 31a, 32a···Chain links, 33···Scrapers, 40···Motor unit, 41, 42···Bearings, 43···Cover, 55··· Drive shaft with direct-mounted sprockets, 60···Shaft body, 60a···First end portion, 60b···Second end portion, 60c···Straight portion, 61···First metal plate sprocket, 61a···Teeth, 61b, 61c···Side surfaces, 62···Second metal plate sprocket, 62a···Teeth, 62b, 62c···Side surfaces, 71···First padding portion, 72···Second padding portion

## Claims

1. A drive shaft (55) with direct-mounted sprockets used in a chain drive unit (14) of a filtration apparatus (10), the drive shaft (55) **characterized by** comprising:
a shaft body (60) including a straight portion (60c) having a cylindrical shape whose outside diameter is constant, a first end portion (60a), and a second end portion (60b), a torque of a motor input to the first end portion (60a);
a first metal plate sprocket (61) which is arranged on the straight portion (60c) of the shaft body (60) at a position close to the first end portion (60a), and includes first teeth (61a) and side surfaces (61b, 61c);
a second metal plate sprocket (62) which is arranged on the straight portion (60c) of the shaft body (60) at a position close to the second end portion (60b), the second metal plate sprocket (62) being arranged parallel to the first metal plate sprocket (61), and including second teeth (62a) and side surfaces (62b, 62c), the second teeth (62a) being the same in number as the first teeth (61a), and being provided at positions corresponding to those of the first teeth (61a);
first padding portions (71) each formed of a weld bead obtained by fillet welding provided at a corner portion defined by the side surfaces (61b, 61c) of the first metal plate sprocket (61) and the shaft body (60), the first padding portions (71) being formed such that their positions are changed to alternate with each other in a circumferential direction of the shaft body (60); and
second padding portions (72) each formed of a weld bead obtained by fillet welding provided at a corner portion defined by the side surfaces (62b, 62c) of the second metal plate sprocket (62) and the shaft body (60), the second padding portions (72) being formed such that their positions are changed to alternate with each other in the circumferential direction of the shaft body (60),
**characterized in that**
a keyway (60d) in which a key is inserted is formed along an axis (X1) of the shaft body (60) on the first end portion (60a) of the shaft body (60), the key enabling coupling with an output shaft of a motor unit (40), and
positions of the first tooth (61a) and the second tooth (62a) conform to each other on a line (L1) along the keyway (60d), the first metal plate sprocket (61) is fixed to the straight portion (60c) by the first padding portions (71), and the second metal plate sprocket (62) is fixed to the straight portion (60c) by the second padding portions (72).

2. The drive shaft (55) with direct-mounted sprockets of Claim 1, **characterized in that** the first padding portions (71) and the second padding portions (72) are formed at equal pitches in the circumferential direction of the shaft body (60).

3. The drive shaft (55) with direct-mounted sprockets of Claim 2, **characterized in that** the first padding portions (71) and the second padding portions (72) are formed at mutually matching positions in the circumferential direction of the shaft body (60).

4. The drive shaft (55) with direct-mounted sprockets of Claim 1, **characterized in that** a thickness (T1) of each of the first teeth (61a) and the second teeth (62a) is less than half an inner width (W1) of each of corresponding chain links (31a, 32a) meshing with the teeth.
